# EUROPEAN PATENT APPLICATION

(11) **EP 2 870 944 A1**
(43) Date of publication of application: **13.05.2015**
(21) Application number: 14171446.9
(22) Date of filing: 06.06.2014
(51) Int. Cl.: A61C 7/14, A61C 7/28

(54) **Constructive disposition applied to self-ligating orthodontic brackets**

(30) Priority: 07.11.2013 BR 202013028685 U
(71) Applicant: Tecnident Equipamentos Ortodonticos Ltda., 13567-620 Sao Carlos/SP (BR)
(72) Inventor: D'Amico Neto, José, 13564-030 São Carlos/SP (BR)
(74) Representative: Capasso, Olga

(57) **Abstract**

The present application for a patent of a utility model disclosure a constructive disposition applied to self-ligating brackets for orthodontic treatment, which comprises a closed housing (2) on the bracket body (1) for a sliding lock (3), which prevents the bracket lock from slipping from the bracket body at the time of unlocking with a system for fixation of the lock (3) on the bracket (1) by means of a straight groove (4) located on the bracket body (1), or an arc-shaped groove (5), which enables the movement of the said lock (3) by means of turning a specific key (6), providing the opening.

## Description

### Technical field

The present patent application for utility model concerns the constructive disposition applied to self-ligating brackets for orthodontic treatment, which comprises a housing for a sliding lock, which prevents the slipping of the orthodontic wire, mainly the slipping of the said bracket lock at the time of unlocking, serving as an opening limiter, whose sliding movement of the bracket can or cannot be assisted by a key, which enables the displacement of the lid to the opening position.

### State of the art

As well known, the self-ligating orthodontic brackets do not need tying the steel wire to the bracket, as these brackets are built with a sliding lock system, which prevents the slip out of steel wire housed in the slot.

However, the constructive disposition of the self-ligating orthodontic brackets enhance s the accumulation of food, and consequently the proliferation of bacteria.

Another inconvenience of the self-ligating brackets is their non-ergonomic shape, which frequently hurts the buccal mucosa, causing small wounds in the patient's mouth.

The lock mechanism of self-ligating orthodontic brackets presents another inconvenience, considering that its locking system requires a specific key by the orthodontist to open the lock.

In this respect, the following patent documents can be mentioned: EP1508310, US8,393,896, US8,282,392, CA2548303 and PI1106372-6.

The claimed invention is intended to solve such problems, in addition to providing better esthetics in using devices for orthodontic treatment.

The main advantage of constructive disposition of the orthodontic brackets is in the closed housing for the lock, which reduced the accumulation of food, and consequently the proliferation of bacteria, as well as in the fixing system of the said lock on the bracket, which is provided with a groove, which enables its movement by means of fixation of a rotating key, or by means of a straight line movement with no need of a specific key.

### Object of the patent application

The object of the patent application is a constructive disposition for a self-ligatingbracket, provided with a closed housing for a sliding lock, which reduced the accumulation of food, and consequently, the proliferation of bacteria, mainly the exit of the said lock from the bracket at the time of unlocking, whose lock fixation system on the bracket is presented by means of a straight groove, which does not require the use of a specific key for the opening of the said lock, or, an arc-shaped groove, which enables the lock movement turning the key to open the lock.

### Brief description of the drawings

Fig. 1 shows the self-ligating bracket with a straight system and its respective lock positioned as an insert, both in front view.
Fig. 2 shows the self-ligating bracket with a straight system and its respective lock positioned as an insert, both in a side view.
Fig. 3 shows the self-ligating bracket with a straight system and its respective lock positioned as an insert, both in a perspective view.
Fig. 4 shows the self-ligating bracket with a straight system and its respective lock duly inserted in the bracket, both in a perspective view.
Fig. 5 shows the self-ligating bracket with an arc-shaped groove system and its respective lock in positioning of an insert, both in perspective view.
Fig. 6 shows the self-ligating bracket with an arc-shaped groove system and its respective lock duly inserted in the bracket, both in perspective view.
Fig. 7 shows the self-ligating bracket with an arc-shaped groove system, lock and key in unlocked positioning, both in perspective view.
Fig. 8 shows the self-ligating bracket with an arc-shaped groove system, lock and key in locked positioning, both in perspective view.

### Detailed description of the constructive disposition

The constructive disposition comprises a closed housing (2) in the bracket body (1) for a sliding lock (3), which reduces the possibility of accumulation of food, and consequently, the proliferation of bacteria, mainly the exit of the said lock from the bracket at the time of unlocking, performing the function of the lock forward movement limiter when unlocking, preventing it from slipping totally from the bracket body.

The lock fixation (3) on the bracket (1) is provided by means of a straight groove (4) located on the bracket body (1), which does not require the use of a specific key for the opening of the said lock (3), or, an arc-shaped groove (5), which enables the movement of the said lock (3) by turning a specific key (6), providing the opening.

The lock (3) is also provided with side cams (7), which fit in the groove walls (8) for the steel wire, assisting the said lock (3) locking on the bracket body (1). This locking is also assisted by a slight inclination (10) existing on the lock sides (3), as well as a groove (9) on the face of the said lock.

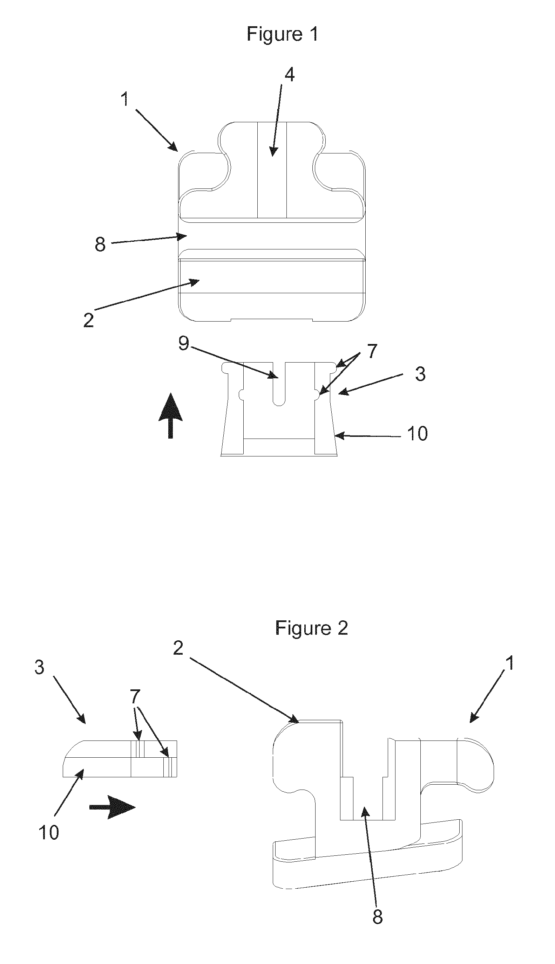

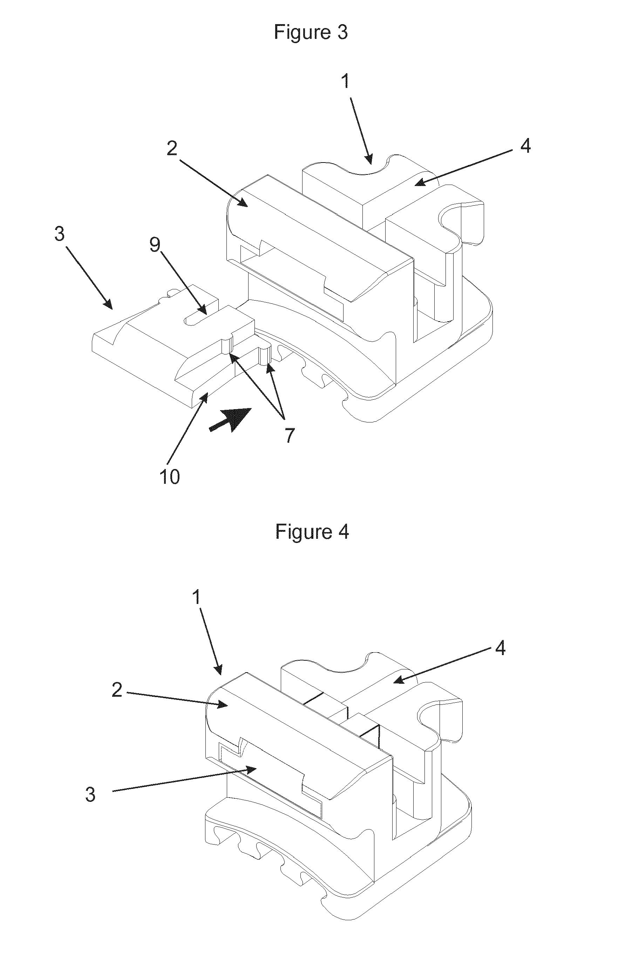

By means of figures 1 to 4, it is possible to observe the bracket body (1) and lock (3) with straight groove (4), which does not require the use of a key, as well as housing (2), where the sliding lock is inserted, and closed to avoid contact with food and making the bracket ergonomic.

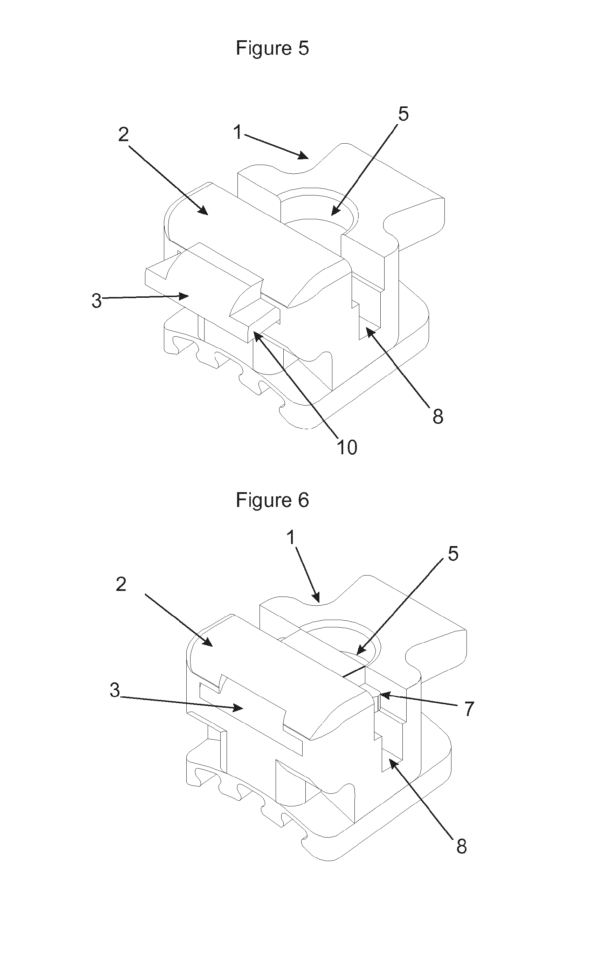

Figures 5 to 8 illustrate the bracket with the arc-shaped groove, which, by means of a specific key, assists in the lock opening, and the said lock is covered, considering the constructive disposition of the housing on the bracket body.

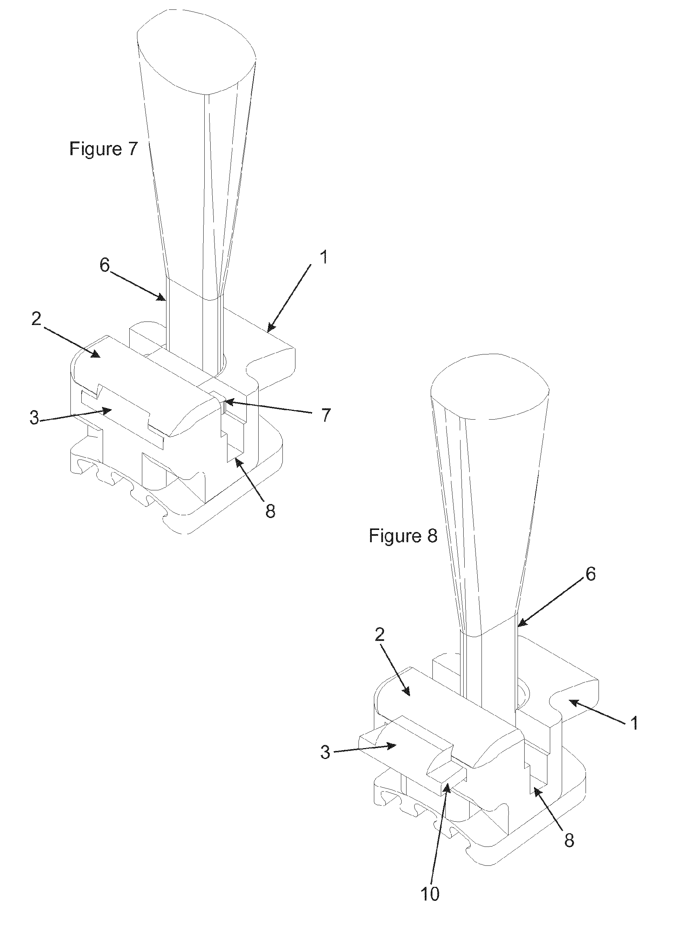

As an example of the lock opening and closing by means of a specific key, figure 7 illustrates the position, closed with the specific key, fit to perform the lock opening, while figure 8 illustrates the movement of the key for the lock opening.

The exposition of the present invention is only illustrative and changes might be done in the details, especially to what refers to size, shape, dimension, production, industrial and visual disposition, but always within the principle of creation, to the extent indicated by the knowledge of the claim presented with this patent application.

## Claims

1. **CONSTRUCTIVE DISPOSITION APPLIED** ON **SELF-LIGATING ORTHODONTIC BRACKETS, characterized by** a closed housing (2) in the bracket body (1) for a sliding lock (3), which limits the lock forward movement during opening, with a lock fixation system (3) on the bracket (1) by means of a straight groove (4) located on the bracket body (1), or an arc-shaped groove (5), which enables the movement of the said lock (3) by means of turning a specific key (6), providing the opening, whose lock (3) is provided with side cams (7), fitting the groove walls (8), which houses the steel wire, and it is also assisted by a slight inclination (10) of the lock sides and by a groove (9).
